## Europäisches Patentamt
## European Patent Office
## Office européen des brevets

(19)

(11) Veröffentlichungsnummer: **0 298 483 B1**

(12)
# EUROPÄISCHE PATENTSCHRIFT

(45) Veröffentlichungstag der Patentschrift: **16.06.93**

(51) Int. Cl.5: **G02F 1/03**, G02F 2/00, H04B 10/00

(21) Anmeldenummer: **88110883.1**

(22) Anmeldetag: **07.07.88**

(54) Optischer Überlagerungsempfänger mit integrierter optischer Polarisationsregelung.

(30) Priorität: **10.07.87 DE 3722940**

(43) Veröffentlichungstag der Anmeldung:
**11.01.89 Patentblatt 89/02**

(45) Bekanntmachung des Hinweises auf die Patenterteilung:
**16.06.93 Patentblatt 93/24**

(84) Benannte Vertragsstaaten:
**BE DE FR GB IT NL**

(56) Entgegenhaltungen:
**DE-A- 3 530 738**

**OPTICS LETTERS, Band 11, Nr. 1, Januar 1986, Seiten 39-41, Optical Society of America; S. THANIYAVARN: "Wavelength-independent, optical-damage-immune LiNbO3 TE-TM mode converter"**

(73) Patentinhaber: **SIEMENS AKTIENGESELL-SCHAFT**
**Wittelsbacherplatz 2**
**W-8000 München 2(DE)**

(72) Erfinder: **Noé, Reinhold, Dipl.-Ing.**
**Sulzbacher Strasse 6**
**W-8000 München 40(DE)**

**Beschreibung**

Die Erfindung betrifft einen optischen Überlagerungsempfänger entsprechend dem Oberbegriff des Anspruchs 1.

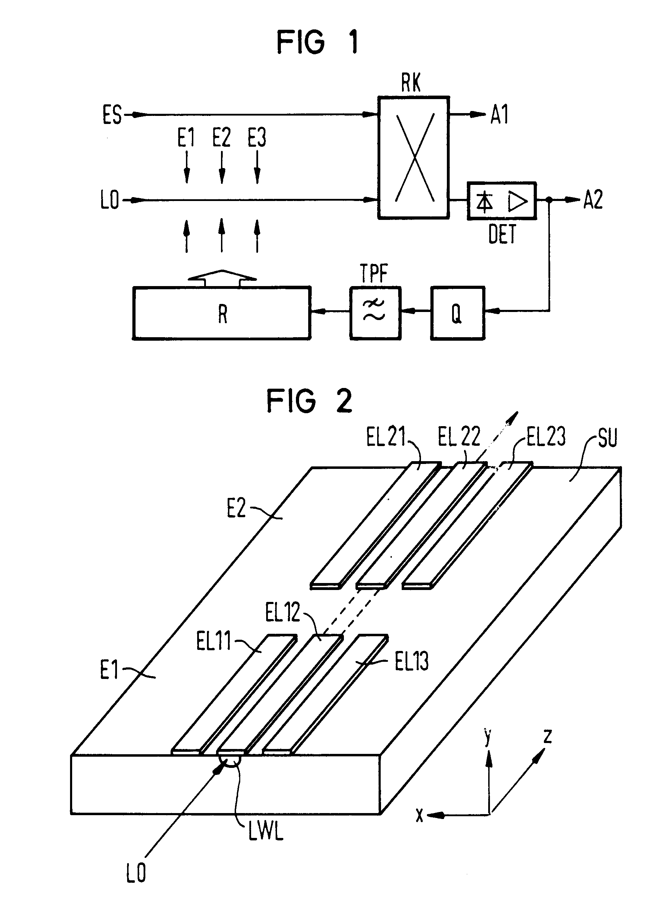

In einem optischen Überlagerungsempfänger wird empfangenes Licht mit dem von einem örtlichen Laser erzeugten Licht überlagert. Voraussetzung für die Überlagerung ist neben der Verwendung von kohärentem Licht die wenigstens näherungsweise gleiche Polarisation der beiden Lichtwellen. Da sich die Polarisationsebene des über Lichtwellenleiter übertragenen Lichtes ändern kann, ist empfangsseitig eine Anordnung zur Polarisationsregelung notwendig, die mittels doppelbrechender Elemente erfolgen kann. In der Fig. 1 ist eine derartige Anordnung gezeigt, die in der deutschen Patentanmeldung P 36 24 853.3 beschrieben ist. Der Eingang ES erhält das ankommende Licht mit unbekannter Polarisation und leitet dieses über einen ersten Lichtweg zu einem ersten Eingang eines Richtkopplers RK. Ein zweiter Lichtweg wird von der Verbindung zwischen einem Anschluß LO für den lokalen Laseroszillator zu einem zweiten Eingang des Richtkopplers RK gebildet. In diesem zweiten Lichtweg sind doppelbrechende Elemente E1, E2, E3 angeordnet, die von einem Regler R gesteuert werden. Diese doppelbrechende Elemente bilden zusammen mit dem zweiten Lichtweg einen Polarisationstransformator für das vom Laseroszillator abgegebene Licht. Alternativ dazu wäre die Anordnung der drei doppelbrechenden Elemente in der Reihenfolge E3, E2, E1 im ersten Lichtweg, dort würde sich jedoch eine Verringerung der Amplitude des Empfangslichtes ergeben, so daß es zweckmäßiger ist, die Polarisation des vom lokalen Laseroszillator abgegebenen Lichtes an die des Empfangslichtes anzupassen. Mit einem der Ausgänge des Richtkopplers RK ist eine Detektoranordnung DET verbunden, die ein elektrisches Ausgangssignal A2 erzeugt und außerdem über einen Quadrierer Q und ein Tiefpaßfilter TPF mit einem Steuereingang des Reglers R verbunden ist. Der Regler sorgt dafür, daß die Leistung des elektrischen Ausgangssignals A2 stets wenigstens näherungsweise maximal ist. Wenn der Polarisationstransformator im ersten Lichtweg angeordnet ist, ergibt sich an seinem Ausgang faktisch eine konstante Polarisation, die gleich der Polarisation des lokalen Laseroszillators ist.

Das Problem bei dem beschriebenen Überlagerungsempfänger mit einem aus drei doppelbrechenden Elementen bestehenden Polarisationstransformator besteht in der aufwendigen Regelung der drei doppelbrechenden Elemente, die dadurch kompliziert wird, daß bei Erreichen der Bereichsgrenze durch den Arbeitspunkt eines der doppelbrechenden Elemente ein komplizierter Rücksetzvorgang ablaufen muß, um einen unterbrechungsfreien Empfang sicherzustellen.

Die DE-A1 35 30 738 zeigt einen weiteren optischen Überlagerungsempfänger mit einem Eingang für Empfangslicht und einem sich daran anschließenden ersten Lichtweg zu einem optischen Richtkoppler, außerdem ist ein örtlicher Laser enthalten, an den sich ein zweiter Lichtweg zum Richtkoppler anschließt. Im Polarisationstransformator sind in diesem Falle fünf doppelbrechende Stellglieder enthalten, die durch einen vergleichsweise aufwendigen Regelalgorithmus in Abhängigkeit von der Polarisation des ankommenden Lichtes und davon, ob eines der eines der doppelbrechenden Stellglieder an eine seiner Bereichsgrenzen gelangt ist, verstellt und gegebenenfalls auch rückgestellt werden. Damit ergibt sich aber mindestens der gleiche Aufwand wie bei der vorstehend erläuterten deutschen Patentanmeldung P 36 24 853.3.

Aus Optics Letters 11, Nr. 1 (Januar 1986), Seiten 39-41 ist aus einer Veröffentlichung von S. Thaniyavarn ein wellenlängenunabhängiger TE-TM Modenkonverter bekannt, der auf einem Substrat aus einem Lithiumniobatkristall drei bandförmige Elektroden enthält, die über einen längeren Bereich parallel ausgebildet sind, wobei sich unter der mittleren Elektrode ein zusätzlich eindiffundierter Wellenleiter befindet.

Aus IEEE Journal of Quantum Elektronics VOL QE-18 NO4 vom April 1982, Seiten 767 bis 771 ist ein integrierter optischer Einseitenbandmodulator und Phasenschieber bekannt, der auf einem elektrooptischen Substrat eine Vielzahl von Kopplersektionen enthält, die jeweils mehrere doppelbrechende Elemente darstellen. Für das Erreichen eines Amplitudenfehlers von unter 10 % der Maximalamplitude und eines Phasenfehlers von unter 0,1 rad wird eine Anzahl von wenigstens N gleich oder größer neun Kopplern benötigt, so daß sich insgesamt in Verbindung mit der Regeleinrichtung ein komplizierter Aufbau ergibt. Zusätzlich tritt wegen der Verwendung eines stark doppelbrechenden Wellenleiters eine große Wellenlängen- und Temperaturabhängigkeit auf, in der Praxis ist wegen der Toleranzen der einzelnen Bauelemente das gewünschte Verhalten nur durch eine vergleichsweise große Anzahl an Kopplersektionen erreichbar.

Die Aufgabe bei der vorliegenden Erfindung besteht also darin, einen optischen Überlagerungsempfänger mit einer Anordnung zur unterbrechungsfreien Polarisationsregelung von Lichtwellen so weiterzubilden, daß neben einem möglichst einfachen Aufbau die Rücksetzvorgänge vereinfacht werden und daß bei der Herstellung aufgetretene Toleranzen im Polarisationstransformator im Betrieb ausgeglichen werden können, so daß keine Funktionsstörungen auftreten.

Erfindungsgemäß wird die Aufgabe durch einen optischen Überlagerungsempfänger der eingangs erwähnten Art gelöst, der durch die Merkmale entsprechend dem Kennzeichen des Patentanspruchs 1 weitergebildet ist.

Die erfindungsgemäße Anordnung bietet in vorteilhafter Weise die Möglichkeit, einen Polarisationstransformator für einen optischen Überlagerungsempfänger mit nur einem doppelbrechenden Element aufzubauen.

Bei einer bevorzugten Weiterbildung des erfindungsgemäßen optischen Überlagerungsempfänger entsprechend dem Patentanspruch 2 bietet sich die Möglichkeit, mittels zweier miteinander kombinierter doppelbrechender Elemente in einfacher Weise Herstellungsfehler zu korrigieren.

Die Erfindung soll im Folgenden anhand eines in der Zeichnung dargestellten Ausführungsbeispiels näher erläutert werden. In der Zeichnung zeigt

Fig. 1 die schematische Darstellung eines optischen Überlagerungsempfängers mit einem Polarisationstransformator und einer Polarisationsregelung und

Fig. 2 einen Polarisationstransformator eines erfindungsgemäßen Überlagerungsempfängers.

Die Fig. 1 ist in Verbindung mit dem Stand der Technik bereits ausführlich erläutert worden, so daß an dieser Stelle nicht weiter darauf eingegangen wird.

Der Polarisationstransformator entsprechend der Fig. 2 enthält ein erstes doppelbrechendes Element E1 als Hauptstellglied und ein zweites doppelbrechendes Element E2 als Korrekturglied. Der Polarisationstransformator ist mittels eines elektrooptischen Substrates SU realisiert, in dem nahe der Oberfläche entlang einer Mittellinie ein wenigstens näherungsweise isotroper Lichtwellenleiter LWL erzeugt wurde.

Als elektrooptisches Substrat wurde dabei Lithiumniobat (LiNbO$_3$) verwendet, in dem mittels Titan der Lichtwellenleiter LWL erzeugt wurde. Das Substrat wurde dabei in X-Richtung aus einem Lithiumniobatkristall geschnitten, so daß sich ein wenigstens näherungsweise isotroper Lichtwellenleiter mit Ausbreitung in z-Richtung ergab, bei dem die Ausbreitungskonstanten von TE- und TM-Wellen etwa gleich groß sind. Die Elektroden EL11, EL12, EL13 des ersten Elementes E1 sind parallel zum Lichtwellenleiter über eine Länge von etwa 8mm und in einem Abstand zueinander von etwa 10 μm in bekannter Weise so aufgebracht, daß elektrische Anschlüsse durch Bonden hergestellt werden können. Im Lichtweg schließt sich an das erste Element E1 das zweite doppelbrechende Element E2 an, bei dem es sich um ein Korrekturglied zum Ausgleich herstellungsbedingter Toleranzen des ersten Elementes E1 handelt, und das hinsichtlich der Abmessungen der Elektroden EL21, EL22, EL23 mit denen des ersten Elementes übereinstimmt. Das Licht durchläuft in diesem Falle in Pfeilrichtung vom Anschluß LO den durch beide Elemente geführten Lichtwellenleiter LWL, das zweite Element E2 als Korrekturglied kann aber auch im Lichtweg vor dem ersten Element E1 angeordnet sein, es kann sich auch in seinen Elektrodenabmessungen von denen des ersten Elementes unterscheiden.

Im Betrieb erhalten die Elektroden EL11, EL12, EL13 Spannungen von + 1/2 $U_b$ + K, + $U_c$ + K und - 1/2 $U_b$ + K oder - 1/2 $U_b$ + K, + $U_c$ + K und + 1/2 $U_b$ + K oder + 1/2 $U_b$ + K, - $U_c$ + K und - 1/2 $U_b$ + K oder - 1/2 $U_b$ + K, - $U_c$ + K und + 1/2 $U_b$ + K. Die Spannung K ist dabei in einem breiten Bereich unkritisch, die Spannung K kann auch variabel sein, bei K = 1/2 $U_b$ ergibt sich die Möglichkeit, eine der beiden äußeren Elektroden mit Bezugspotential zu verbinden. Die Spannungen $U_b$ an der ersten bzw. dritten Elektrode EL11, EL13 erzeugen im Bereich des Lichtwellenleiters ein elektrisches Feld in y-Richtung und die Spannung $U_c$ ein elektrisches Feld in x-Richtung. Die Spannungen bestimmen sich aus

$$U_b = P1 \times d \times \cos.(2g) + P2 \text{ und}$$
$$U_c = P3 \times d \times \sin.(2g + P4) + P5.$$

Bei den Konstanten P2 und P5 handelt es sich um Spannungen, bei der Konstante P4 um einen Winkel, diese Konstanten sind jedoch bei einem idealen doppelbrechenden Element gleich Null. Die Konstanten P1 und P3 betreffen die Spannungsabhängigkeit der erzeugten Ablenkungswinkel, sie sind so gewählt, daß sich ein lineares doppelbrechendes Element mit einer Verzögerung von d und einem Erhebungswinkel von g gegenüber der y-Achse ergibt. Der Erhebungswinkel g ist dabei der Winkel der in der Polarisation unbeeinflußten linearen Lichtmode, dieser Winkel tritt auf der Poincaré-Kugel mit dem doppelten Betrag als Längengrad gegenüber einem Bezugsmeridian auf. Wird die Konstante P2 verschieden von Null gewählt, dann bedeutet dies, daß eine zusätzliche Spannung eingeführt wird, durch die eine eventuell vorhandene Dispersion zwischen den TE- und den TM-Wellen, also die intrinsische lineare Doppelbrechung eines nichtisotropen Lichtwellenleiters, ausgeglichen werden kann. Dadurch, daß die Konstanten P4 und P5 verschieden von Null gewählt werden, daß also eine zusätzliche Spannung und eine Winkelverschiebung auftreten, lassen sich weitere störende Einflüsse wenigstens näherungsweise ausgleichen, die sich durch Toleranzen bei der Herstellung ergeben. So ist es z.B durch entsprechende Wahl dieser Größen möglich, einen Versatz der Elektroden gegenüber dem Lichtwellenleiter auszugleichen.

Das erste doppelbrechende Element E1 erzeugt aus einer Lichtwelle am Eingang unterbrechungsfrei eine Lichtwelle am Ausgang. Dabei können entweder beide Polarisationen oder aber nur die Eingangs- oder die Ausgangspolarisation variabel sein.

Es soll zunächst der Fall betrachtet werden, daß die Eingangspolarisation wenigstens näherungsweise rechts- oder linkszirkular und fest ist und die Ausgangspolarisation variabel sein soll. Dieser Fall ist beim Einsatz im zweiten Lichtweg entsprechend der Fig. 1 gegeben, da dort die Polarisation des vom lokalen Laseroszillator erzeugten Lichtes der Polarisation des Eingangslichtes nachgeführt werden muß und deshalb der Polarisationstransformator Licht mit variabler Polarisation abgeben muß. Die Ausgangspolarisation ergibt sich bei Darstellung als zirkularer Jones-Vektor, der als Komponent die komplexen Amplituden von links- und rechtszirkular polarisierten Wellen enthält, zu

$$E_{zirA} = \begin{bmatrix} \cos(d/2) \\ j \times \exp(-j \times 2g) \times \sin(d/2) \end{bmatrix}$$

Durch Wahl der Verzögerung d mindestens zwischen zwei benachbarten ganzzahligen Vielfachen von 180° als Grenzen des Arbeitsbereiches läßt sich cot (d/2), also der Betrag des Quotienten der beiden Komponenten, frei wählen. Zweckmäßigerweise wählt man als Bereich 0° bis 180° oder -180° bis 0°, da dann die Spannungen $U_c$ und $U_b$ vergleichsweise niedrige Beträge haben, die in Abhängigkeit von Elektrodenabstand und -länge beim Ausführungsbeispiel in der Größenordnung von etwa 40 Volt liegen. Außerdem lassen sich so zusätzliche Toleranzprobleme vermeiden. Da auch die Phasendifferenz - 2g + 90° zwischen den beiden Komponenten des durchlaufenden Lichtes frei wählbar ist, kann so beliebige Ausgangspolarisation erzeugt werden. Für den Fall, daß die Verzögerung d im Regelbetrieb die Bereichsgrenzen wenigstens näherungsweise erreicht, wird der doppelte Erhebungswinkel 2g um 180° nach oben oder unten verschoben. Die Richtung der Verschiebung ist beliebig, denn der zulässige Bereich für 2g ist unbegrenzt im Sinne von endlos.

Mit dem doppelbrechenden Element E1 als einzigem Element eines Polarisationstransformators besteht auch die Möglichkeit, bei variabler Eingangspolarisation eine variable Ausgangspolarisation zu erzeugen. In diesem Fall ist die Verzögerung d mindestens zwischen zwei benachbarten ganzzahligen Vielfachen von 360° als Bereichsgrenzen frei wählbar. Zweckmäßigerweise wählt man als Bereiche 0° bis 360° oder -360° bis 0°, um mit möglichst niedrigen Spannungen $U_c$, $U_b$ auszukommen und um zusätzliche Toleranzprobleme zu vermeiden. Auch der Erhebungswinkel g ist frei wählbar. Analog zum vorherigen Fall wird bei Annäherung der Verzögerung d an eine der Bereichsgrenzen der doppelte Erhebungswinkel um beispielsweise 180° nach oben oder nach unten verschoben.

Auch in diesem Fall ist an sich nur ein doppelbrechendes Element E1 notwendig. Zum Ausgleich von herstellungsbedingten Toleranzen ist es in beiden Fällen zweckmäßig, ein weiteres doppelbrechendes Element E2 als Korrekturglied im Lichtweg hinzuzufügen, dabei kann dies im Lichtweg vor oder hinter dem ersten Element E1 geschehen.

Für die Herstellung der doppelbrechenden Elemente kann es zweckmäßig sein, den aus dem eigentlichen doppelbrechenden Element E1 und dem Korrekturglied E2 bestehenden Polarisationstransformator symmetrisch auszuführen, so daß also die Abmessungen der Elektroden EL11, EL12, EL13 des ersten Elementes denen der Elektroden EL21, EL22, EL23 des zweiten Elementes entsprechen. Neben den Abmessungen stimmen auch die Abstände der Elektroden voneinander und vom Lichtwellenleiter überein, eine Vorzugsrichtung für das Licht im Lichtwellenleiter LWL besteht nicht.

Für den Fall, daß der Polarisationstransformator mit den doppelbrechenden Elementen im ersten Lichtweg liegt und damit vom Empfangslicht durchlaufen wird, ergibt sich eine variable Eingangspolarisation und, wenn der Regler R die Leistung des elektrischen Ausgangssignals A2 bestimmungsgemäß wenigstens näherungsweise auf ihrem Maximalwert hält, eine feste, wenigstens näherungsweise zirkulare Ausgangspolarisation. Auch in diesem Falle kann das Element E1 getrennt verwendet werden, in der Praxis wird wegen der herstellungsbedingten Toleranzen die Anwendung der in der Fig. 2 gezeigten Kombination der beiden Elemente E1, E2 zweckmäßig sein. Es hat sich dabei gezeigt, daß es besonders zweckmäßig ist, das Korrekturglied E2 an derjenigen Seite des ersten doppelbrechenden Elementes E1 anzuordnen, an der das Licht mit beliebiger Polarisation auftreten kann. Die Polarisation ist prinzipiell eine zweidimensionale Größe.

Durch die beiden Spannungen $U_c$, $U_b$ am Korrekturglied E2 können Abweichungen der Ausgangspolarisation vom gewünschten Wert ausgeglichen werden, wenn dabei die Verzögerung d in der Nähe eines Vielfachen von 180° liegt, ist ein Ausgleich der Abweichungen der Ausgangspolarisation in beiden Dimensionen möglich. Ist das Korrekturglied in der beschriebenen Weise angeordnet und liegt seine Verzögerung d in der Nähe eines ganzzahligen Vielfachen von 180°, insbesondere bei 0°, dann ist bei beliebigen Erhebungswinkeln die feste Ausgangspolarisation zirkular.

**Patentansprüche**

**1.** Optischer Überlagerungsempfänger mit einem Eingang für Empfangslicht und einem sich daran anschließenden ersten Lichtweg zu einem optischen Richtkoppler, mit einem lokalen Laser und sich daran anschließenden zweiten Lichtweg zum Richtkoppler, mit einem, in einem der beiden Lichtwege angeordneten und doppelbrechende Elemente enthaltenden Polarisationstransformator und mit einem, aus dem elektrischen Ausgangssignal des Überlagerungsempfängers Stellsignale für den Polarisationstransformator erzeugenden Regler,
**dadurch gekennzeichnet,**
daß der Polarisationstransformator nur ein doppelbrechendes Element (E1) enthält, bei dem in einem elektrooptischen Substrat (SU) ein wenigstens näherungsweise isotroper Lichtwellenleiter (LWL) oberflächennah eingefügt ist und auf der diesem Lichtwellenleiter benachbarten Oberfläche des Substrates parallel zum Lichtwellenleiter 3 parallele Elektroden (EL11, EL12, EL13) aufgebracht sind, daß die mittlere Elektrode (EL12) unmittelbar über dem Lichtwellenleiter (LWL) angeordnet ist, daß an den beiden äußeren Elektroden Spannungen anliegen, die ± 1/2 $U_b$ + K und ± 1/2 $U_b$ + K betragen, daß an der mittleren Elektrode eine Spannung ± $U_c$ + K anliegt, daß

$$U_b = P1 \times d \times \cos.(2g) + P2 \text{ und}$$
$$U_c = P3 \times d \times \sin.(2g + P4) + P5$$

ist und dabei K beliebig ist und P1...P5 von den Fertigungs- und Materialkonstanten abhängen, wobei im Idealfall P2 gleich groß P4 gleich groß P5 gleich Null ist, und daß
die Konstanten P1 und P3 dabei so gewählt sind, daß sich ein lineares doppelbrechendes Element mit einer Verzögerung von d und einem Erhebungswinkel von g gegenüber der y-Achse ergibt, und
der Erhebungswinkel g dabei der Winkel der in der Polarisation unbeeinflußten linearen Lichtmode ist.

**2.** Optische Überlagerungsempfänger nach Patentanspruch 1,,
**dadurch gekennzeichnet,**
daß zur Korrektur herstellungsbedingter Toleranzen dem den Polarisationstransformator bildenden ersten doppelbrechenden Element (E1) im Lichtweg ein gleichaufgebautes zweites doppelbrechendes Element (E2) als Korrekturglied vor- oder nachgeschaltet ist.

**Claims**

**1.** Optical heterodyne receiver having an entrance for reception light and a first light path, linked thereto, to an optical directional coupler, having a local laser and a second light path, linked thereto, to the directional coupler, having a polarisation transformer which is disposed in one of the two light paths and which includes birefringent elements, and having a regulator generating from the electrical output signal of the heterodyne receiver actuating signals for the polarisation transformer,
characterised in that
the polarisation transformer includes only one birefringent element (E1), in which an at least approximately isotropic optical waveguide (LWL) is inserted in an electrooptical substrate (SU) near the surface and on that surface of the substrate which is adjacent to this optical waveguide 3 parallel electrodes (EL11, EL12, EL13) are applied parallel to the optical waveguide, in that the central electrode (EL12) is disposed immediately above the optical waveguide (LWL), in that at the two outer electrodes voltages are present which amount to ± 1/2 $U_b$ + K and ± 1/2 $U_b$ + K, in that at the central electrode a voltage ± $U_c$ + K is present, in that

$$U_b = P1 \times d \times \cos.(2g) + P2 \text{ and}$$
$$U_c = P3 \times d \times \sin.(2g + P4) + P5$$

and in this case K is arbitrarily selectable and P1...P5 are dependent upon the production and material constants, where in the ideal case P2 equals P4 equals P5 equals zero, and in that
the constants P1 and P3 are in this case selected so that a linear birefringent element with a delay of d and an angle of elevation of g in relation to the y axis is formed, and
in this case the angle of elevation g is the angle of the linear optical mode which is uninfluenced in the polarisation.

2. Optical heterodyne receiver according to Patent Claim 1,
characterised in that
for the correction of production-related tolerances there is provided upstream or downstream of the first birefringent element (E1) forming the polarisation transformer, in the light path, a similarly constructed second birefringent element (E2) as correction component.

**Revendications**

1. Récepteur optique superhétérodyne comportant une entrée pour la lumière reçue et un premier trajet de la lumière qui se raccorde à cette entrée et qui aboutit à un coupleur optique directionnel, un laser local et un second trajet de la lumière qui se raccorde à ce laser et qui aboutit au coupleur directionnel, un transformateur de polarisation disposé dans l'un des deux trajets de la lumière et contenant des éléments biréfringents, et un régulateur qui produit, à partir du signal de sortie électrique du récepteur superhétérodyne, des signaux de réglage pour le transformateur de polarisation,
caractérisé par le fait que le transformateur de polarisation ne commporte qu'un seul élément biréfringent (E1), dans lequel un guide d'ondes optiques (LWL) au moins approximativement isotrope est inséré à proximité de la surface dans un substrat électro-optique (SU) et 3 électrodes parallèles (EL11, EL12, EL13) sont disposées sur la surface du substrat, qui est voisine de ce guide d'ondes optiques, parallèlement à ce dernier, que l'électrode centrale (EL12) est disposée juste au-dessus du guide d'ondes optiques (LWL), qu'aux deux électrodes extérieures sont appliquées des tensions qui sont égales à $\pm\ 1/2\ U_b\ +\ K$ et $\pm\ 1/2\ U_b\ +\ K$, qu'à l'électrode centrale est appliquée une tension $\pm\ U_c\ +\ K$, que l'on a

$$U_b\ =\ P1\ \text{x}\ d\ \text{x}\ \cos.(2g)\ +\ P2$$

et

$$U_c\ =\ P3\ \text{x}\ d\ \text{x}\ \sin.(2g\ +\ P4)\ +\ P5$$

et que K est quelconque et P1...P5 dépendent des constantes de fabrication et du matériau, avec dans le cas idéal P2 égal à P4 égal à P5 égal à zéro, et que
les constantes P1 et P3 sont choisies de telle sorte qu'on obtient un élément biréfringent linéaire présentant un retard d et un angle d'élévation g par rapport à l'axe y, et
que l'angle d'élévation g est l'angle du mode de lumière linéaire, dont la polarisation n'est pas influencée.

2. Récepteur optique superhétérodyne suivant la revendication 1, caractérisé par le fait que pour la correction de tolérances de fabrication, est monté en amont ou en aval du premier élément biréfringent (E1) qui forme le transformateur de polarisation, dans le trajet de la lumière un second élément biréfringent (E2) de même constitution, utilisé comme organe de correction.

# FIG 1

RK

ES → → A1

E1 E2 E3

LO → → A2

DET

TPF

R ← ← Q

# FIG 2

EL21 EL22 EL23 SU

E2

EL12

EL11 EL13

E1

y z

x

LWL

LO